# EUROPEAN PATENT SPECIFICATION

(11) **EP 1 090 518 B1**
(45) Date of publication and mention of the grant of the patent: **24.08.2005**
(21) Application number: 99927994.6
(22) Date of filing: 17.06.1999
(51) Int. Cl.: H04Q 7/38

(54) **METHOD OF ASSIGNING A TRAFFIC CHANNEL IN A COMMUNICATIONS SYSTEM AND CONTROL UNIT FOR SAME**
VERFAHREN ZUR ZUWEISUNG EINES VERKEHRKANALS IN EINEM KOMMUNIKATIONSSYSTEM UND STEUEREINRICHTUNG DAZU
PROCEDE D'ASSIGNATION D'UNE VOIE DE TRAFIC DANS UN SYSTEME DE TELECOMMUNICATIONS, ET UNITE DE COMMANDE DESTINEE A CELUI-CI

(30) Priority: 24.06.1998 GB 9813584
(43) Date of publication of application: 11.04.2001
(73) Proprietor: Motorola Limited, Hampshire RG22 4PD (GB)
(72) Inventor: HOPKINSON, Jonathan, Juniper at Ardmore Singapore 259951 (SG)
(74) Representative: Jepsen, René Pihl
(86) International application number: PCT/EP1999/004158
(87) International publication number: WO 1999/067968

(56) References cited:
- EP-A- 0 419 243
- WO-A-97/20445
- US-A- 5 903 843

## Description

### Field of the Invention

The present invention relates to a method of assigning a traffic channel in a communications system. The present invention also relates to a control unit for assigning a traffic channel in a communications system.

### Background of the Invention

In a communications system, information is conveyed by means of a communications link which is provided between a control unit and a communications unit. With respect to the information, a distinction can be made between traffic and signalling. Traffic information comprises the information that the communications system is being used to ultimately communicate. Examples of traffic information include the speech content of a telephone call, the text and picture information of a facsimile message, electronic mail, telemetry data, and so on. Signalling information comprises information being used, broadly speaking, to control and manage the components of the communications system for the purpose of facilitating the successful relaying of the traffic information.

The communications link is divided into separate channels. Certain channels are used primarily for transmitting signalling information, whereas others are primarily for transmitting traffic information. Channels can be defined in different manners depending on the type of communications system. For example, in a cellular radio communication system operated on a time division multiple access (TDMA) basis, a typical channel consists of a particular time slot, and in the case of a frequency hopping TDMA system, a typical channel consists of a particular time slot combined with a particular carrier frequency sequence. Alternatively, in a cellular radio communication system operated on a code division multiple access (CDMA) basis, a typical channel corresponds to a particular code on a wideband carrier. In a two-way radio a typical channel can consist in its simplest form of just a particular frequency. Another distinction is between a physical channel and a logical channel. A physical channel is a specific physical carrier, e.g. a specific frequency, whereas a logical channel is one encoded, e.g. by TDMA or CDMA techniques, on to the physical carrier. The present invention can apply to physical channels or logical channels.

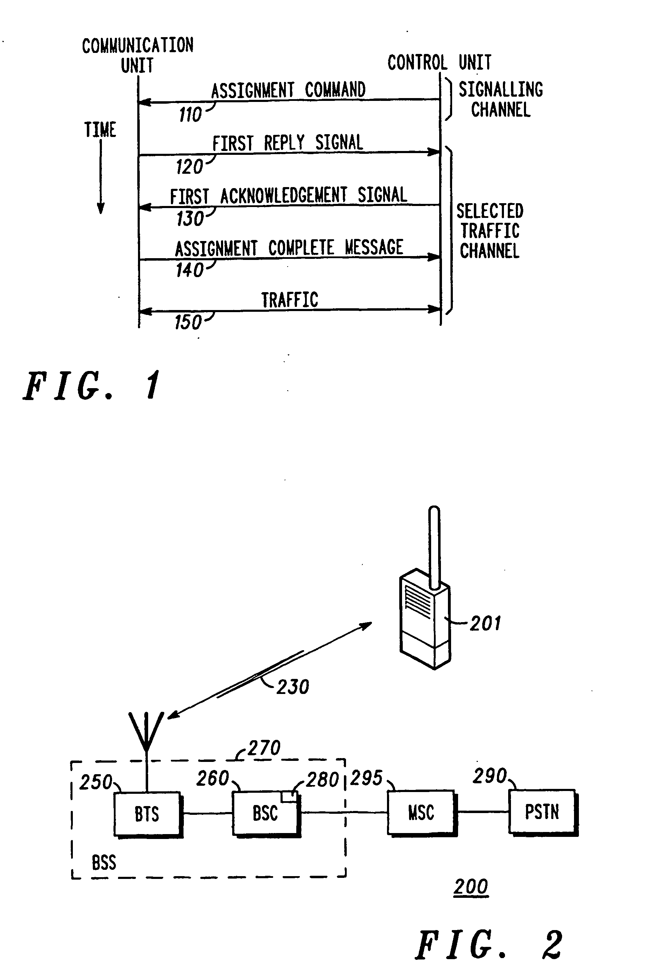

A known assignment procedure is employed to select and establish a particular traffic channel on which a call or the like is thereafter to be transmitted. One or more signalling channels are used in the early stages of the assignment procedure. Initial paging or messaging, of a type dependent upon the specific system characteristics, is carried out to arrive at a stage where the control unit and the communications unit are both ready for the process of assigning the traffic channel. The traffic channel is then assigned as follows, as shown in FIG. 1.

The control unit selects which traffic channel is to be assigned. The control unit then sends an assignment command 110, by means of a signalling channel to the communications unit. The assignment command will, inter alia, inform the communications unit of the identity of the selected traffic channel.

Thereafter, a two-way communication process, sometimes referred to as a handshake process, will take place between the communications unit and the control unit, using messages sent on the selected traffic channel.

The handshake process is as follows. The communications unit, in response to receipt of the assignment message from the control unit, sends a first reply signal 120 to the control unit using the selected traffic channel. Thereafter, the control unit, in response to receipt of this first reply signal, sends a first acknowledgement signal 130 to the communications unit, again using the traffic channel. Successful receipt by the communications unit of this first acknowledgement signal represents successful completion of the handshake process. The communications unit therefore transmits an assignment complete message 140 to the control unit, using the selected traffic channel, and thereafter traffic transmission 150 between the control unit and the communications unit takes place on the traffic channel.

One communications system employing such an assignment procedure is a cellular communications system, for example a Global System for Mobile communications (GSM) system. In a GSM system the control system can be located in the base station controller (BSC) of a base station system (BSS) and the communications unit is for example in the form of a mobile telephone. In a GSM system, the handshaking process consists of the so-called LAPDm (Link Access Procedure Dm) establishment process which is described in the SMG TS 04-06 [Mobile Station - Base Station System (MS - BSS) interface Data Link (DL) layer specification]. The first reply signal as mentioned above is implemented as a Set Asynchronous Balanced Mode (SABM) message and the first acknowledgement signal as mentioned above is implemented as an Unnumbered Acknowledgement (UA) message.

An example of a method of call assignment is disclosed in WO 97/20445 A1. WO 97/20445 A1 discloses a method of establishing a telecommunication connection from a subscriber station of a radio system to a public switched telephone network. A subscriber station sends a call request and in response an acknowledgement message is sent to the subscriber station. A speech path is then formed between the subscriber station and the public switched telephone network.

In many communications systems, the channel assignment procedures therein attempted are executed successfully according to the procedure outlined above. However, occasionally, after having sent a first reply signal, the communications unit fails to receive the awaited first acknowledgement signal from the control unit. This can either be due to the control unit not having previously received the first reply signal from the communications unit, thus it has never sent the first acknowledgement signal, or, in the event of the control unit having indeed received the first reply signal, the acknowledgement signal it will then have transmitted has not been received by the communications unit. In either case the lack of reception could be due to any of a number of different factors, such as interference, insufficient signal power level, and so on.

When the communications unit fails to receive the awaited first acknowledgement signal, it will consequently transmit a second reply signal, again using the selected traffic channel. In a known communications system, such as a conventional GSM system, if this second reply signal is successfully received by the control unit , the control unit will in response transmit a further acknowledgement signal, again on the selected traffic channel, and at the same power level as the first acknowledgement signal. If this further acknowledgement signal is successfully received by the communications unit, the handshaking process is completed, and the communications unit therefore transmits an assignment complete message to the control unit, using the selected traffic channel, and thereafter traffic transmission between the control unit and the communications unit takes place on the traffic channel.

If, however, having transmitted the second reply signal, the communications unit still fails to receive an acknowledgement signal from the control unit, the communications unit will transmit yet a further reply signal using the selected traffic channel, and the above procedure will be repeated, until a predetermined number of reply signals have been sent without successful response. When this predetermined number has been reached, the communications unit will instead send an assignment failed message to the control unit, which is sent on the signalling channel rather than the traffic channel.

In a GSM system, for example, the total number of SABM messages sent before an assignment failed message is sent is six, i.e. expressed in the general terminology used herein, a first reply signal, a second reply signal, and four further reply signals.

In response to the assignment failed message, the control unit will abort the entire call establishing procedure.

In the above described systems, the provision of second and further reply signals from the communications unit, in response to a failure to receive an acknowledgement signal, provides the advantage that a call can be set up even if the first attempt at handshaking, i.e. the first attempted exchange on the selected traffic channel of a reply signal and an acknowledgement signal, was unsuccessful. This provides a reduction in the number of failed calls.

However, the provision of second and further reply signals from the communications unit also results in a disadvantage. The disadvantage is that any ensuant traffic communication, e.g. call, which has been established as a result of the second or further reply signals, is likely to be of poorer quality, leading for example to a noisy or dropped call, particularly in the event of any recurrence of whichever event or condition originally caused the failure of the first part of the handshake process. This is because the call is to be conducted on the same traffic channel as was used in the failed exchange of the reply signal and acknowledgement signal.

This disadvantage is particularly strong in communications systems that employ frequency re-use, e.g. cellular communications systems, in which systems moreover ever tighter frequency re-use patterns are being introduced.

A further problem or disadvantage in a system such as GSM is that the type of coding used when doing the handshaking, FACCH, is more robust than that used thereafter during the actual traffic communication, hence a set of conditions on the intended traffic channel that just allow the successful completion of a SABM/UA handshake process may not in reality be suitably robust to support the traffic that thereafter follows on the same channel under the same conditions but employing a less robust form of coding.

### Summary of the Invention

According to one aspect of the present invention, there is provided a method of assigning a traffic channel in a communications system;
the method comprising the steps of:
- selecting a first traffic channel,
- sending a first assignment command, including notification of which channel was selected as said first traffic channel, on a signalling channel to a communications unit,
- transmitting, in response to receipt from said communications unit of a first reply signal on said first traffic channel, a first acknowledgement signal on said first traffic channel at a first power level,
   characterized by further comprising the steps of:

- selecting, in response to receipt from said communications unit of a second reply signal on said first traffic channel, a second traffic channel different from said first traffic channel, and
- sending a second assignment command, including notification of which channel was selected as said second traffic channel, on a signalling channel, to said communications unit.

According to another aspect of the present invention, there is provided a method of assigning a traffic channel in a communications system; the method comprising the steps of:
- selecting a first traffic channel,
- sending a first assignment command, including notification of which channel was selected as said first traffic channel, on a signalling channel to a communications unit,
- transmitting, in response to receipt from said communication unit of a first reply signal on said first traffic channel, a first acknowledgement signal on said first traffic channel at a first power level,
characterized by further comprising the steps of:
- for a predetermined number of further reply signals, transmitting in response to receipt of each respective further reply signal, a corresponding further acknowledgement signal on said first traffic channel, wherein the first further acknowledgement signal is transmitted at a power level higher than said first power level and any following further acknowledgement signals are each transmitted at a respective power level higher than the power level of at which the acknowledgement signal preceding it was transmitted,
- selecting, in response to receipt from said communications unit of a further reply signal beyond said predetermined number, a second traffic channel different from said first traffic channel, and
- sending a second assignment command, including notification of which channel was selected as said second traffic channel, on a signalling channel, to said communications unit.

According to another aspect of the present invention, there is provided a control unit for assigning a traffic channel in a communications system;
the control unit comprising:
- means for selecting a first traffic channel,
- means for sending a first assignment command, including notification of which channel was selected as said first traffic channel, on a signalling channel to a communications unit,
- means for transmitting, in response to receipt from said communications unit of a first reply signal on said first traffic channel, a first acknowledgement signal on said first traffic channel at a first power level,
   and characterized by further comprising:

- means for selecting, in response to receipt from said communications unit of a second reply signal on said first traffic channel, a second traffic channel different from said first traffic channel, and
- means for sending a second assignment command, including notification of which channel was selected as said second traffic channel, on a signalling channel, to said communications unit.

According to another aspect of the present invention, there is provided a control unit for assigning a traffic channel in a communications system; the control unit comprising:
- means for selecting a first traffic channel,
- means for sending a first assignment command, including notification of which channel was selected as said first traffic channel, on a signalling channel to a communications unit,
- means for transmitting, in response to receipt from said communication unit of a first reply signal on said first traffic channel, a first acknowledgement signal on said first traffic channel at a first power level,
and characterized by further comprising:
- means for, for a predetermined number of further reply signals, transmitting in response to receipt of each respective further reply signal, a corresponding further acknowledgement signal on said first traffic channel, wherein the first further acknowledgement signal is transmitted at a power level higher than said first power level and any following further acknowledgement signals are each transmitted at a respective power level higher than the power level at which the acknowledgement signal preceding it was transmitted,
- means for selecting, in response to receipt from said communications unit of a further reply signal beyond said predetermined number, a second traffic channel different from said first traffic channel, and
- means for sending a second assignment command, including notification of which channel was selected as said second traffic channel, on a signalling channel, to said communications unit.

### Brief Description of the Drawings

FIG. 1 is a representation of a successful prior art assignment process including handshaking.
FIG. 2 is an illustration of a cellular communications system which is in accordance with the present invention.
FIG. 3 is a process flow chart of a first embodiment of the present invention.
FIG. 4 is a process flow chart of a second embodiment of the present invention.
FIG. 5 is a process flow chart of a third embodiment of the present invention.

### Description of Preferred Embodiments of the Invention

FIG. 2 shows a communications system 200 including a communications unit 201 and a control station 270. In this example, communications unit 201 consists of a mobile telephone, and control station unit 270 consists of a base station system (BSS). BSS 270 includes a base transceiver station (BTS) 250 and a base station controller (BSC) 260. In the present example, a communication link established between BSS 270 and communications unit 201 is achieved by a radio link 230. The radio link 230 has the capability to carry one or more signalling channels and a plurality of traffic channels. For a particular call a traffic channel must be assigned and established. This is carried out by two way communication between BSS 270 and communications unit 201.

BSS 270 is further connected to a mobile services switching centre (MSC) 295. The telephone calls using communication link 230 can be forwarded, for example, from MSC 295 to a public switched telephone network (PSTN), such as PSTN 290 also shown in FIG. 2.

The present first embodiment relates to a GSM system functioning within the restraints of SMG TS 04-06 [Mobile Station - Base Station System (MS - BSS) interface Data Link (DL) layer specification]. Such a system gains particular advantage from the present invention, but it is to be appreciated that the present invention can be embodied in systems other than the GSM system. In the present first embodiment, steps of the invention are carried out by a control unit 280 which is located in BSC 260. It is to be understood that the control unit 280 can alternatively be located in other parts of a communications systems. For example control unit 280 can alternatively be located in MSC 295, and can even be constituted of various component parts distributed to more than one location in a communications unit.

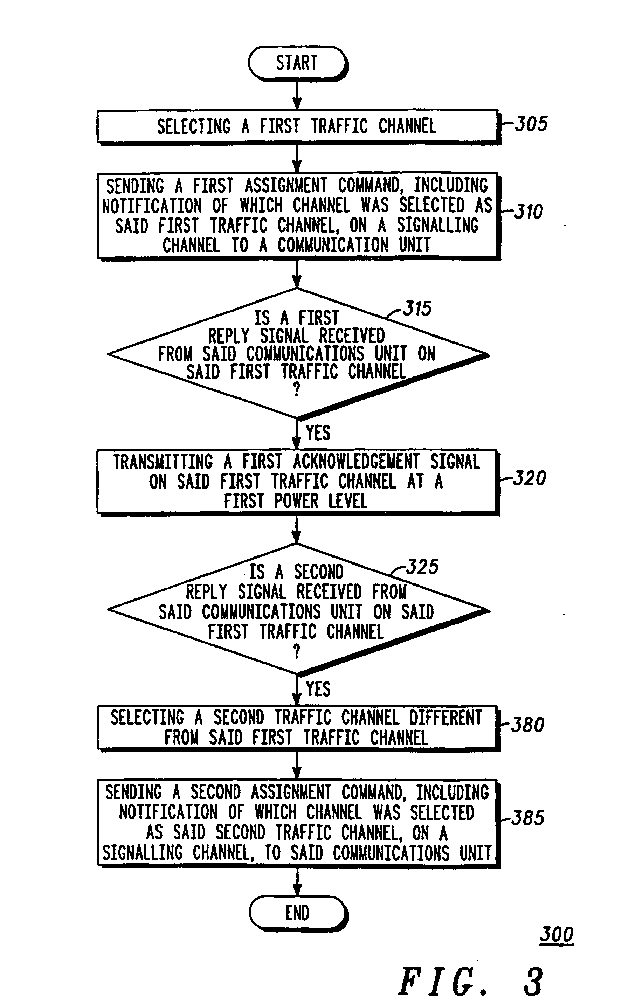

A traffic channel is assigned in the present first embodiment according to the process flow chart 300 of FIG. 3. Referring to FIG. 3, function box 305 shows the step of selecting a first traffic channel. In the present first embodiment this step is carried out by control unit 280 located in BSC 260.

The next step carried out is that of sending a first assignment command, including notification of which channel was selected as said first traffic channel, on a signalling channel to a communications unit, as shown in function box 310 of FIG. 3. In the present first embodiment, such a step is part of the Link Access Procedure "DM" (LAPDm) establishment process defined in the GSM specification. Sending such a command is therefore constituted by FACCH signalling (Fast Associated Control Channel). In the present GSM embodiment, communications unit 201 is programmed such that on receipt of such an assignment command, it will in reply send a Set Asynchronous Balanced Mode (SABM) message, also defined in the GSM specification, back to BSC 260 via BTS 250. It will do this using the particular traffic channel that had been selected by control unit 280 and communicated to communications unit 201 as part of the assignment command sent to it from BSC 260 according to function step 310 as described above.

The next step in the method of the present first embodiment is for BSS 270 to determine if a first reply signal has been received from said communications unit on said first traffic channel, as shown in decision 315 of FIG. 3. This is carried out by BSC 260 determining whether a first SABM message reply has been received from communications unit 201 on the selected traffic channel. If such a first reply has indeed been received, then the next step is that of transmitting a first acknowledgement signal on said first traffic signal at a first power level, as shown in function box 320. In the present embodiment, the acknowledgement signal consists of an Unnumbered Acknowledgement (UA) frame as defined in the GSM specification.

In the event that the UA frame was successfully received by communications unit 201, communications unit 201 would be able to transmit an assigned complete message back to BSC 260. However, if this is not the case, then according to the GSM specification, communications unit 201 will instead send a second SABM message, that is a second reply signal, which will again be on the first traffic channel.

The next step is that of determining whether such a second SABM message has been received by BSC 260. This step of determining if a second reply signal has been received from the communications unit on the first traffic channel is shown in decision box 325 of FIG. 3. If a second reply signal has indeed been received, then in the present embodiment, the next step is that of selecting a second traffic channel different from said first traffic channel, which step is shown at function box 380 in FIG. 3.

In the present embodiment this selection is carried out by BSC 260 on instructions from control unit 280. Other possibilities exist however, for example the selection of a second traffic channel could be carried out directly by control unit 280, or by some system component remote from BSS 270, such as MSC 295. It will be appreciated that the exact mechanics of such selection, and indeed of the various transmitting, receiving and determining steps described above will be readily implemented by persons of ordinary skill in the art by known methods chosen in exact detail according to the particular system requirements or circumstances.

Thereafter follows the step of sending a second assignment command, including notification of which channel was selected as said second traffic channel, on a signalling channel, to said communications unit 201, as shown in function box 385 of FIG. 3. The signalling channel used for this step may be either the same signalling channel as used earlier in the procedure, or alternatively a different signalling channel. The second assignment command will contain an instruction to communications unit 201 to try the second traffic channel previously selected in function step 380.

The present first embodiment provides certain particular advantages compared to operation of a GSM system without its inclusion, as is now explained. In the GSM system, the standard operating protocol is such that the communications unit 201 may repeat the SABM transmission up to five times in the event that it receives no UA. In other words, the GSM specification allows 5 attempts at receiving the UAs sent from BSS 270. Thus it is possible that one of these attempts at handshaking will result in completion of channel assignment despite the fact that a need for more than one attempt indicates that the intended traffic channel is of poor quality or signal strength. This could mean that the communications channel thereafter established would be likely to lead to a noisy or dropped call. However, by implementing the embodiment described above, the assignment to a low quality communications channel will be actively avoided, and instead the step of selecting and assigning a second traffic channel will be implemented which advantageously avoids the establishment of a poor quality traffic channel.

Reference is again made to a function box 320 which shows the step of transmitting a first acknowledgement signal on said first traffic channel at a first power level. A further advantage can be obtained by providing that said first power level is lower than a maximum potential power level of said first traffic channel. In other words, control unit 280 is used to determine the power level for the transmission of the first acknowledgement signal, which in this embodiment is a UA message, at a power level lower than the maximum that can be achieved from BSS 270, in particular with reference to the technical capabilities of BT 250. It was mentioned above that a further problem or disadvantage in a system such as GSM is that the type of coding used when doing the handshaking, FACCH, is more robust than that used thereafter during the actual traffic communication, hence a set of conditions on the intended traffic channel that just allow the successful completion of a SABM/UA handshake process may not in reality be suitably robust to support the traffic that thereafter follows on the same channel under the same conditions but employing a less robust form of coding. This problem is advantageously alleviated by the use of a power level lower than the maximum potential power level of the traffic channel. This is because it ensures that so long as the FACCH signalling is successful then thereafter during speech communication the system will always have a degree of accommodation for increasing the power level during the speech communication so as to avoid noisy or dropped calls. It will be appreciated that whilst this advantage is particularly useful for the GSM system as described, it will also be advantageous in any communication system wherein the signalling used during the handshake process is potentially more robust, e.g. due to its format or power levels, than the communication process that is destined to be used thereafter for the traffic itself on the channel that is thereby established.

Referring again to FIG. 3, a further feature that achieves yet a further advantage with respect to the step of function box 320, is a feature wherein said first power level is lower than a first predetermined power level corresponding to the intended standard power level of said first traffic channel. Bearing in mind the explanation provided above about the possible disadvantages arising from the fact that FACCH signalling is more robust than speech, it can be appreciated that this further feature achieves firstly the same advantage as above of providing a capability for the system to resort to a higher power level during the speech communication than has been used to establish a channel during the FACCH signalling stage, hence accommodating the difference in robustness. This further feature however also provides a further advantage in that such capability remains within the intended standard power level of the first traffic channel.

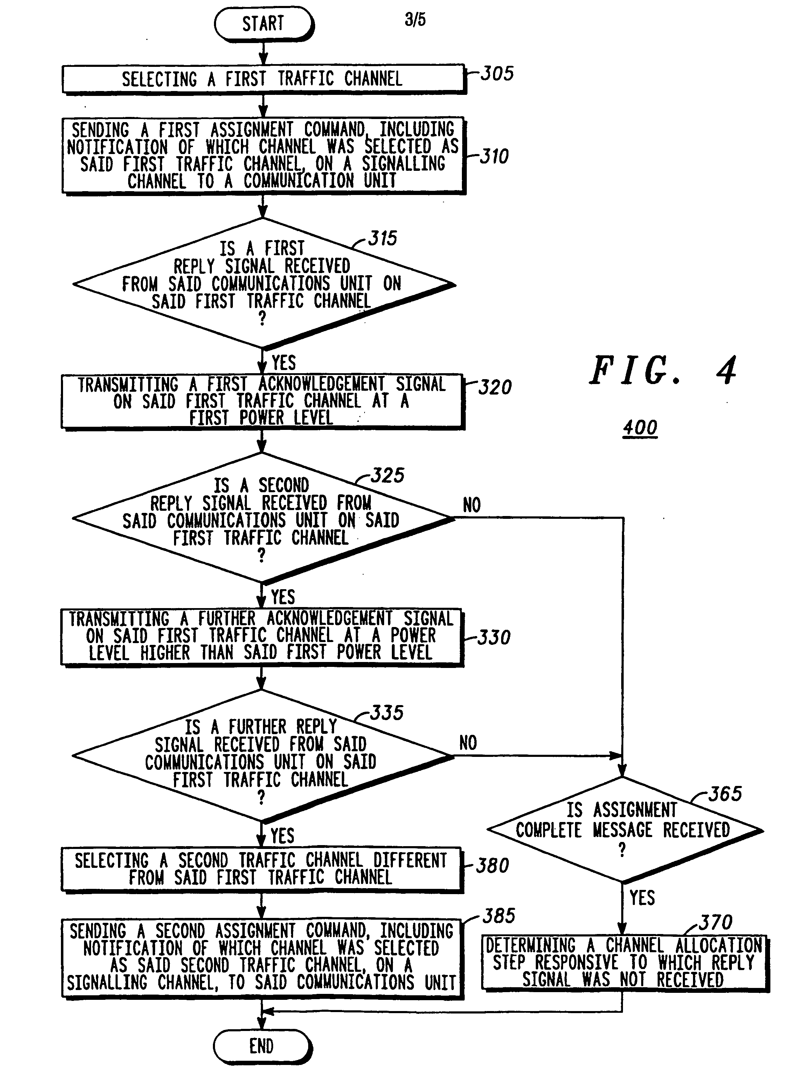

A second embodiment will now be described with reference to process flow chart 400 of FIG. 4. The communications system employed in this second embodiment is the same as that described with reference to the first embodiment, i.e. it is a GSM system and includes inter alia the components shown in FIG. 2.

Referring to FIG. 4, the same steps as those of the first embodiment are followed up to and including the step of determining whether a second reply signal is received from said communications unit on said first traffic channel, as shown in decision box 325 of both FIGS. 3 and 4. Thereafter, the present second embodiment differs from the first embodiment as follows.

If such a second reply signal is received then responsive to such receipt , the next step carried out is that of transmitting a further acknowledgement signal on said first traffic channel at a power level higher than said first power level, as shown in function box 330 of FIG. 4. In other words a second UA message is sent by BSS 270, at a power level higher than the first UA message.

The next step is that of determining if a further reply signal has been received from said communications unit on said first traffic channel, as shown in decision box 335 of FIG. 4. If such a further reply signal has indeed been received, then the remaining steps of the present embodiment are the same as those in the first embodiment, and are implemented the same way, i.e. the step of selecting a second traffic channel different from said first traffic channel, which step is shown at function box 380 in FIGS. 3 and 4, and the step of sending a second assignment command, including notification of which channel was selected as said second traffic channel, on a signalling channel, to said communications unit 201, as shown in function box 385 of FIGS. 3 and 4.

It is noted that the steps of this second embodiment so far described achieve at least the same advantages in the same way as was the case with the first embodiment. In addition, the additional feature of providing that said first power level is lower than a maximum potential power level of said first traffic channel, or the additional feature wherein said first power level is lower than a first predetermined power level corresponding to the intended standard power level of said first traffic channel, as described above with reference to the first embodiment, are applicable in the same fashion and achieve the same advantages in the case of the present second embodiment.

However, an additional facet of the second embodiment exists and will now be described in terms of the steps followed when, contrary to the above, the outcome of the determining steps shown at either of decision boxes 325 and 335 of FIG. 4 is that a second or further reply signal is not received from said communications unit on said first traffic channel. In this event, control unit 280 next carries out the step of determining whether an "Assignment Complete" message has been received, as shown at decision box 365 of FIG. 4. An Assignment Complete message is a message that will have been sent by communications unit 201 on successful completion of the handshaking procedure. This message is sent on the selected traffic channel. In terms of the present GSM embodiments, this is implemented on a FACCH channel.

If the assignment complete message has indeed been received, then the next step to be carried out is that of determining a channel allocation step responsive to which reply signal was not received, as shown in function box 370. In other words, control unit 280 determines whether the Assignment Complete message was received after only one first reply signal had been received (the "NO" outcome of decision box 325 of FIG. 4) or whether instead it was received after a second reply signal had been received (i.e. at the "NO" outcome stage of decision box 335 of FIG. 4). The significance of this is that control unit 280 is able to determine whether the handshaking procedure was completed, as would be ideally desired, as a result of a straightforward single SABM/UA two-way communication, or whether instead, as would not be desired, the handshaking procedure was completed only after a second UA message was required to be sent. The second scenario would indicate that the channel was potentially of weak quality or strength. Thus a channel allocation step is carried out responsive to this new information.

It is advantageous to be able to determine a channel allocation step using this information, which information would not be available in a conventional GSM system or procedure. One example of a channel allocation step which can be carried out accordingly is that of determining the power level to be used on the relevant selected traffic channel. In GSM a number of power levels may be selected and this overall method provides the advantage of providing additional information in order to determine a satisfactory power level in terms of improving quality and avoiding dropped and noisy calls, whilst nevertheless reducing the amount of power resources consumed in providing such improvements. An alternative example of a channel allocation step is that of determining to implement a handover. Such determination can be in the form of intending to implement the handover as soon as possible after the traffic channel is first established. Alternatively, it may be in the form of deciding to implement a future handover, i.e. deciding to implement a handover when some other system parameters facilitate efficient, desirable or economical choice of such handover. Overall it can be seen that the possibilities presented by such newly provided information for improving the procedures of dynamic channel allocation are multiple and varied, and will be chosen by the person skilled in the art according to the requirements of the particular system under consideration. The present GSM system is one system wherein dynamic channel allocation provides very useful advantages and is consequently a system that can make particularly advantageous use of the present invention. Nevertheless, it is emphasised that the above described particular advantages with respect to channel allocation will be obtained to some extent in any system employing dynamic channel allocation.

Embodiments of the present invention advantageously include a step which is repeated each time a further reply signal is received, for a predetermined number of such further reply signals. The repeated step is that of transmitting in response to receipt of each respective further reply signal, a corresponding further acknowledgement signal on said first traffic channel, wherein the first further acknowledgement signal is transmitted at a power level higher than said first power level and any following further acknowledgement signals are each transmitted at a respective power level higher than the power level at which the acknowledgement signal preceding it was transmitted. The above described second embodiment can be considered as one including this step, for the case where the predetermined number of further reply signals is set at one. A third embodiment will now be described, wherein the predetermined number of further reply signals is set at five.

The third embodiment again relates to a GSM system. For a GSM system the choice of 5 further reply signals has particular advantages as explained below, but it is stressed that the choice of the predetermined number of further reply signals can be made by skilled persons dependant upon the relevant protocols of any system to which these advantageous aspects of the present invention are to be applied.

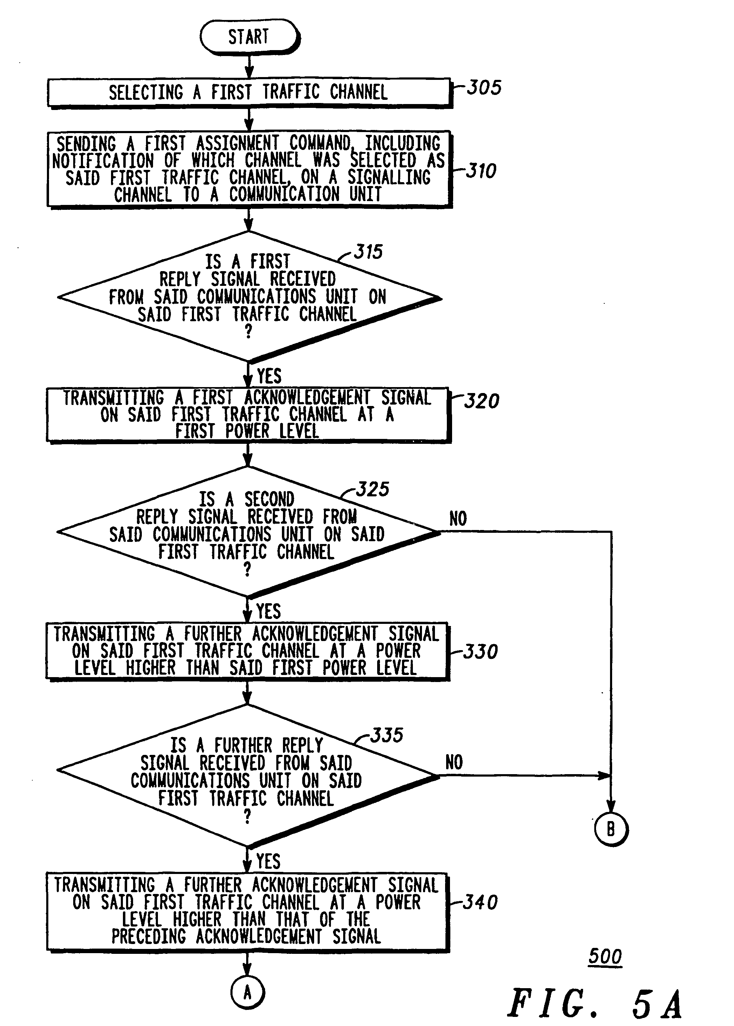

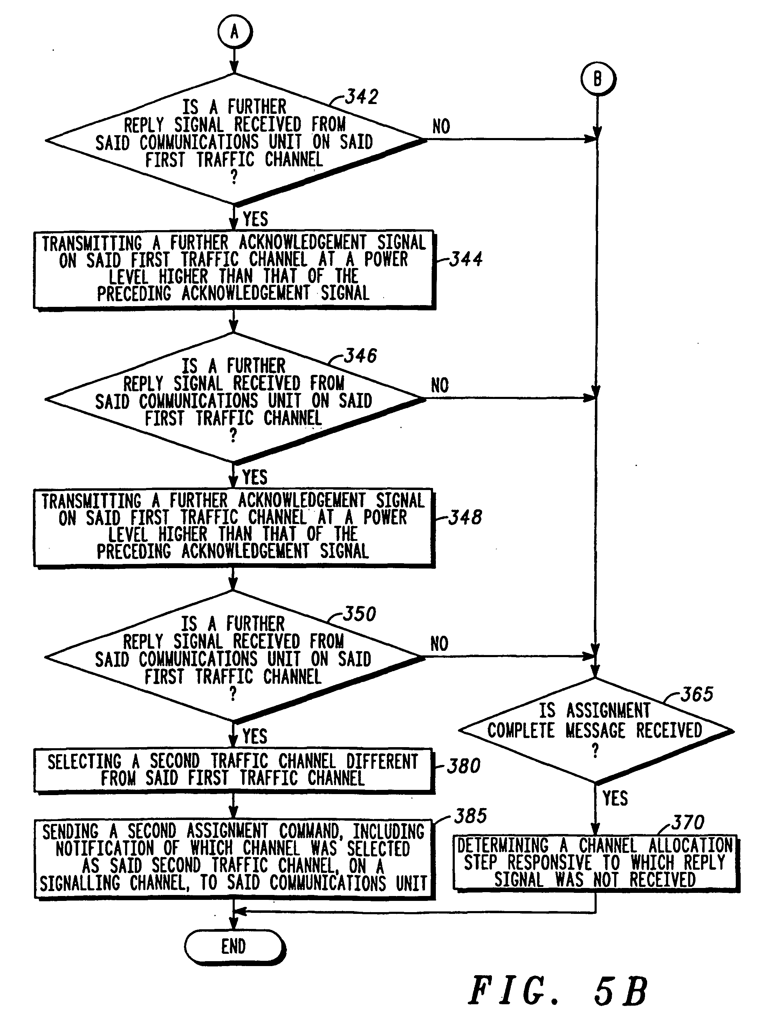

The present third embodiment comprises the steps already described above with respect to the first and second embodiments. Additionally, as a result of choosing the predetermined number of further signals to be five, the present third embodiment comprises further repetitions of the step of transmitting a further acknowledgement signal on said first traffic channel at a power level higher than the power level of the proceeding acknowledgement signal, as shown in function boxes 340, 344 and 348 of FIG. 5, and similarly further repetitions of the step of determining whether a further reply signal is received, as shown at decision boxes 342, 346 and 350 of FIG. 5. A particular advantage of this third embodiment with respect to a GSM system derives from the standard GSM protocol relating to the SABM/UA handshaking procedure, i.e. the point that the communications unit 201 may repeat the SABM transmission up to five times in the event that it receives no UA, as already described above. Thus it can be appreciated that the present third embodiment advantageously extracts extra information by using increasingly higher power levels. It moreover does this to maximum effect whilst remaining in the constraints of the standard GSM system, by setting the predetermined number to five.

In each of the above embodiments, an advantage is obtained by virtue of changing to a second traffic channel when the first channel is potentially weak, whereas in conventional systems the original first weak channel will be disadvantageously perserved with. Such an advantage will be achieved even when the second chosen channel is not in theory or in any predetermined way superior in quality, signal strength, or other aspect, relative to the first channel. This is because the problem with the originally selected channel might be some random, variable or transient problem from which improvement will or might in practise be achieved by merely changing to a standard alternative channel that in theory is only of equal standing but in practise does not, or may not, suffer from the first channel's particular current problem. Nevertheless, in the case of all the embodiments described above, a further advantage can be obtained by the optional feature of providing that said second traffic channel is of a higher quality than said first traffic channel or alternatively the option that said second traffic channel has either a higher maximum potential power level or a higher intended standard power level compared to said first traffic channel. This provides the advantage of an improved alternative channel selection which provides a facility for improved performance in cases where the problem with the first channel is in fact fundamental or permanent.

The different power levels used in the above described second and third embodiments can be implemented by means of a database settable parameter.

One advantageously efficient procedure is to set the different power levels at respective increments such that if the number of acknowledgement signals to be sent is N, then the first power level is set equal to a reference power level multiplied by 1/ N, the second power level is set equal to the reference power level multiplied by 2/N, and so on. The reference power level will be selected according to the particular system requirements. It may for particular benefit be set equal to or in some straightforward relation to either the maximum potential power level of the first selected traffic channel, or the first power level used for sending the first acknowledgement signal, or the above mentioned predetermined power level corresponding to the intended standard power level of the traffic channel.

In the above embodiments, it has been described that the various method steps are carried out by control unit 280 located in BSC 260. It will be apparent that the exact means of implementing the above described method steps will vary according to the exact system requirements and the existing technology within the applicable system. In a GSM system as described above, the relevant control functions can advantageously be implemented in terms of the software used in the BSS. However, in a GSM system or other systems implementation can alternatively be by means of hardware, or by means of a combination of software and hardware, or by direct operator influence.

More generally, it is noted that some or all of the various advantages deriving from the present invention will be achieved in numerous communications systems other than those described in the present embodiments above. In particular, digital communications systems other than GSM can be considered, including other TDMA systems, CDMA systems and hybrid TDMA/CDMA systems, and also analogue systems. Indeed, any system involving an initialising two-way handshaking type procedure in which the intended traffic channel itself plays a role in a two-way initialising or handshaking type procedure will derive benefit from the present invention. Furthermore, the invention is applicable to communications systems in which the communications unit is other than that particularly described in the above embodiments or wherein the infrastructure of the communications system itself is other than as particularly described in the embodiments above.

## Claims

1. A method of assigning a traffic channel in a communications system;
the method comprising the steps of:
- selecting (305) a first traffic channel,
- sending (310) a first assignment command, including notification of which channel was selected as said first traffic channel, on a signalling channel to a communications unit (201),
- transmitting (320), in response to receipt from said communications unit of a first reply signal on said first traffic channel, a first acknowledgement signal on said first traffic channel at a first power level,
**characterized by** further comprising the steps of:
- selecting (380), in response to receipt from said communications unit (201) of a second reply signal on said first traffic channel, a second traffic channel different from said first traffic channel, and
- sending (385) a second assignment command, including notification of which channel was selected as said second traffic channel, on a signalling channel, to said communications unit (201).

2. A method according to claim 1, wherein said first power level is lower than a maximum potential power level of said first traffic channel.

3. A method according to claim 2, wherein said first power level is lower than a first predetermined power level corresponding to the intended standard power level of said first traffic channel.

4. A method of assigning a traffic channel in a communications system;
the method comprising the steps of:
- selecting (305) a first traffic channel,
- sending (310) a first assignment command, including notification of which channel was selected as said first traffic channel, on a signalling channel to a communications unit (201),
- transmitting (320), in response to receipt from said communication unit (201) of a first reply signal on said first traffic channel, a first acknowledgement signal on said first traffic channel at a first power level,
**characterized by** further comprising the steps of:
- for a predetermined number of further reply signals, transmitting (330, 340, 344, 348) in response to receipt of each respective further reply signal, a corresponding further acknowledgement signal on said first traffic channel, wherein the first further
acknowledgement signal is transmitted at a power level higher than said first power level and any following further acknowledgement signals are each transmitted at a respective power level higher than the power level at which the acknowledgement signal preceding it was transmitted,
- selecting (380), in response to receipt from said communications unit (201) of a further reply signal beyond said predetermined number, a second traffic channel different from said first traffic channel, and
- sending (385) a second assignment command, including notification of which channel was selected as said second traffic channel, on a signalling channel, to said communications unit (201).

5. A method according to claim 4 wherein said predetermined number is one.

6. A method according to claim 4 or 5, wherein said first power level is lower than a maximum potential power level of said first traffic channel.

7. A method according to claim 6, wherein said first power level is lower than a first predetermined power level corresponding to the intended standard power level of said first traffic channel.

8. A method according to any preceding claim, wherein said second traffic channel is of a higher quality than said first traffic channel.

9. A method according to any preceding claim, wherein said second traffic channel has either a higher maximum potential power level or a higher intended standard power level compared to said first traffic channel.

10. A method according to any of claims 4-9 further comprising the step of determining a channel allocation step responsive to which reply signal was not received.

11. A method according to claim 10, wherein said channel allocation step comprises determining a power level to be used on the selected traffic channel.

12. A method according to any preceding claim, wherein said communications system is a cellular communications system.

13. A method according to claim 12, wherein said communications system is a GSM system.

14. A method according to claim 4 wherein said predetermined number is 4.

15. A method according to claims 12-14 as dependent on claim 10, wherein said channel allocation step comprises determining to implement a future handover.

16. A method according to claim 4 wherein the respective power levels at which said first and further acknowledgement signals are transmitted are implemented by means of a database settable parameter.

17. A control unit for assigning a traffic channel in a communications system; the control unit comprising:
- means for selecting a first traffic channel,
- means for sending a first assignment command, including notification of which channel was selected as said first traffic channel, on a signalling channel to a communications unit (201),
- means for transmitting, in response to receipt from said communications unit (201) of a first reply signal on said first traffic channel, a first acknowledgement signal on said first traffic channel at a first power level,
and **characterized by** further comprising:
- means for selecting, in response to receipt from said communications unit (201) of a second reply signal on said first traffic channel, a second traffic channel different from said first traffic channel, and
- means for sending a second assignment command, including notification of which channel was selected as said second traffic channel, on a signalling channel, to said communications unit (201).

18. A control unit according to claim 17, wherein said first power level is lower than a maximum potential power level of said first traffic channel.

19. A control unit according to claim 18, wherein said first power level is lower than a first predetermined power level corresponding to the intended standard power level of said first traffic channel.

20. A control unit for assigning a traffic channel in a communications system;
the control unit comprising: .
- means for selecting a first traffic channel,
- means for sending a first assignment command, including notification of which channel was selected as said first traffic channel, on a signalling channel to a communications unit (201),
- means for transmitting, in response to receipt from said communication unit (201) of a first reply signal on said first traffic channel, a first acknowledgement signal on said first traffic channel at a first power level,
and **characterized by** further comprising:
- means for, for a predetermined number of further reply signals, transmitting in response to receipt of each respective further reply signal, a corresponding further acknowledgement signal on said first traffic channel, wherein the first further acknowledgement signal is transmitted at a power level higher than said first power level and any following further acknowledgement signals are each transmitted at a respective power level higher than the power level at which the acknowledgement signal preceding it was transmitted,
- means for selecting, in response to receipt from said communications unit (201) of a further reply signal beyond said predetermined number, a second traffic channel different from said first traffic channel, and
- means for sending a second assignment command, including notification of which channel was selected as said second traffic channel, on a signalling channel, to said communications unit (201).

21. A control unit according to claim 20 wherein said predetermined number is one.

22. A control unit according to claim 20 or 21, wherein said first power level is lower than a maximum potential power level of said first traffic channel.

23. A control unit according to claim 22, wherein said first power level is lower than a first predetermined power level corresponding to the intended standard power level of said first traffic channel.

24. A control unit according to any of claims 17-23, wherein said second traffic channel is of a higher quality than said first traffic channel.

25. A control unit according to any of claims 17-24, wherein said second traffic channel has either a higher maximum potential power level or a higher intended standard power level compared to said first traffic channel.

26. A control unit according to any of claims 20-25, further comprising the step of determining a channel allocation step responsive to which reply signal was not received.

27. A control unit according to claim 26, wherein said channel allocation step comprises determining a power level to be used on the selected traffic channel.

28. A control unit according to any of claims 17-27, wherein said communications system is a cellular communications system.

29. A control unit according to claim 28, wherein said communications system is a GSM system.

30. A control unit according to claim 20, wherein said predetermined number is 4.

31. A control unit according to any of claims 28-30 as dependent on claim 26, wherein said channel allocation step comprises determining to implement a future handover.

32. A control unit according to claim 20, wherein the respective power levels at which said first and further acknowledgement signals are transmitted are implemented by means of a database settable parameter.

33. A base station system for a cellular communications system comprising a control unit according to any of claims 17-32.

34. A mobile services switching centre for a cellular communications system comprising a control unit according to any of claims 17-32.

## Patentansprüche

1. Verfahren zum Zuweisen eines Verkehrskanals in einem Kommunikationssystem, wobei das Verfahren die Schritte umfasst:
- Auswählen (305) eines ersten Verkehrskanals
- Senden (310) eines ersten Zuweisungsbefehls, einschließlich Benachrichtigung darüber, welcher Kanal als der erste Verkehrskanal ausgewählt wurde, auf einem Signalgebungskanal an eine Kommunikationseinheit (201),
- Übermitteln (320), als Antwort auf den Empfang eines ersten Antwortsignals von der Kommunikationseinheit auf dem ersten Verkehrskanal, eines ersten Bestätigungssignals auf dem ersten Verkehrskanal bei einem ersten Leistungspegel,
**dadurch gekennzeichnet, dass** weiter die Schritte umfasst sind:
- Auswählen (380), als Antwort auf den Empfang eines zweiten Antwortsignals von der Kommunikationseinheit (201) auf dem ersten Verkehrskanal, eines zweiten Verkehrskanals, der von dem ersten Verkehrskanal verschieden ist, und
- Senden (385) eines zweiten Zuweisungsbefehls, einschließlich Benachrichtigung darüber, welcher Kanal als der zweite Verkehrskanal ausgewählt wurde, auf einem Signalgebungskanal an die Kommunikationseinheit (201).

2. Verfahren nach Anspruch 1, wobei der erste Leistungspegel niedriger ist als ein maximal möglicher Leistungspegel auf dem ersten Verkehrskanal.

3. Verfahren nach Anspruch 2, wobei der erste Leistungspegel niedriger ist als ein erster vorbestimmter Leistungspegel, der dem vorgesehenen Standardleistungspegel des ersten Verkehrskanals entspricht.

4. Verfahren zum Zuweisen eines Verkehrskanals in einem Kommunikationssystem, wobei das Verfahren die Schritte umfasst:
- Auswählen (305) eines ersten Verkehrskanals,
- Senden (310) eines ersten Zuweisungsbefehls, einschließlich Benachrichtigung darüber, welcher Kanal als der erste Verkehrskanal ausgewählt wurde, auf einem Signalgebungskanal an eine Kommunikationseinheit (201),
- Übermitteln (320), als Antwort auf den Empfang eines ersten Antwortsignals von der Kommunikationseinheit (201) auf dem ersten Verkehrskanal, eines ersten Bestätigungssignals auf dem ersten Verkehrskanal bei einem ersten Leistungspegel,
**dadurch gekennzeichnet, dass** weiter die Schritte umfasst sind:
- für eine vorbestimmte Anzahl weiterer Antwortsignale, Übermitteln (330, 340, 344, 348), als Antwort auf den Empfang des jeweiligen weiteren Antwortsignals, eines entsprechenden weiteren Bestätigungssignals auf dem ersten Verkehrskanal, wobei das erste weitere Bestätigungssignal bei einem Leistungspegel übermittelt wird, der höher ist als der erste Leistungspegel und wobei alle folgenden weiteren Bestätigungssignale jeweils bei einem Leistungspegel übermittelt werden, der höher ist als der Leistungspegel, bei dem das jeweils vorangehende Bestätigungssignal übermittelt wurde,
- Auswählen (380), als Antwort auf den Empfang eines weiteren Antwortsignals über die vorbestimmte Anzahl hinaus von der Kommunikationseinheit (201), eines zweiten Verkehrskanals, der von dem ersten Verkehrskanal verschieden ist, und
- Senden (385) eines zweiten Zuweisungsbefehls, einschließlich Benachrichtigung darüber, welcher Kanal als der zweite Verkehrskanal ausgewählt wurde, auf einem Signalgebungskanal an die Kommunikationseinheit (201).

5. Verfahren nach Anspruch 4, wobei die vorbestimmte Anzahl eins ist.

6. Verfahren nach Anspruch 4 oder 5, wobei der erste Leistungspegel niedriger ist als ein maximal möglicher Leistungspegel des ersten Verkehrskanals.

7. Verfahren nach Anspruch 6, wobei der erste Leistungspegel niedriger ist als ein erster vorbestimmter Leistungspegel, der dem vorgesehenen Standardleistungspegel des ersten Verkehrskanals entspricht.

8. Verfahren nach einem der vorangehenden Ansprüche, wobei der zweite Verkehrskanal von höherer Qualität ist als der erste Verkehrskanal.

9. Verfahren nach einem der vorangehenden Ansprüche, wobei der zweite Verkehrskanal entweder einen höheren maximal möglichen Leistungspegel oder einen höheren vorgesehenen Standardleistungspegel im Vergleich zu dem ersten Verkehrskanal aufweist.

10. Verfahren nach einem der Ansprüche 4 bis 9, weiter umfassend den Schritt des Bestimmens eines Kanalzuordnungsschrittes, der empfindlich dafür ist, welches Antwortsignal nicht empfangen wurde.

11. Verfahren nach Anspruch 10, wobei der Kanalzuordnungsschritt ein Bestimmen eines Leistungspegels, der auf dem ausgewählten Verkehrskanal verwendet werden soll, umfasst.

12. Verfahren nach einem der vorangehenden Ansprüche, wobei das Kommunikationssystem ein zellulares Kommunikationssystem ist.

13. Verfahren nach Anspruch 12, wobei das Kommunikationssystem ein GSM-System ist.

14. Verfahren nach Anspruch 4, wobei die vorbestimmte Anzahl vier ist.

15. Verfahren nach den Ansprüchen 12 bis 14, soweit abhängig von Anspruch 10, wobei der Kanalzuordnungsschritt ein Bestimmen, einen zukünftigen Handover zu implementieren, umfasst.

16. Verfahren nach Anspruch 4, wobei die entsprechenden Leistungspegel, bei denen die ersten und weiteren Bestätigungssignale übermittelt werden, mittels eines einstellbaren Datenbankparameters implementiert werden.

17. Steuereinheit zum Zuweisen eines Verkehrskanals in einem Kommunikationssystem, wobei die Steuereinheit umfasst:
- Mittel zum Auswählen eines ersten Verkehrskanals,
- Mittel zum Senden eines ersten Zuweisungsbefehls, einschließlich Benachrichtigung darüber, welcher Kanal als der erste Verkehrskanal ausgewählt wurde, auf einem Signalgebungskanal an eine Kommunikationseinheit (201),
- Mittel zum Übermitteln, als Antwort auf den Empfang eines ersten Antwortsignals von der Kommunikationseinheit (201) auf dem ersten Verkehrskanal, eines ersten Bestätigungssignals auf dem ersten Verkehrskanal bei einem ersten Leistungspegel, und **dadurch gekennzeichnet, dass** weiter umfasst sind:
- Mittel zum Auswählen, als Antwort auf den Empfang eines zweiten Antwortsignals von der Kommunikationseinheit (210) auf dem ersten Verkehrskanal, eines zweiten Verkehrskanals, der von dem ersten Verkehrskanal verschieden ist und
- Mittel zum Senden eines zweiten Zuweisungsbefehls, einschließlich Benachrichtigung darüber, welcher Kanal als der zweite Verkehrskanal ausgewählt wurde, auf einem Signalgebungskanal an die Kommunikationseinheit (201).

18. Steuereinheit nach Anspruch 17, wobei der erste Leistungspegel niedriger ist als ein maximal möglicher Leistungspegel des ersten Verkehrskanals.

19. Steuereinheit nach Anspruch 18, wobei der erste Leistungspegel niedriger ist, als ein erster vorbestimmter Leistungspegel, der dem vorgesehenen Standardleistungspegel des ersten Verkehrskanals entspricht.

20. Steuereinheit zum Zuweisen eines Verkehrskanals in einem Kommunikationssystem, wobei die Steuereinheit umfasst:
- Mittel zum Auswählen eines ersten Verkehrskanals,
- Mittel zum Senden eines ersten Zuweisungsbefehls, einschließlich Benachrichtigung darüber, welcher Kanal als der erste Verkehrskanal ausgewählt wurde, auf einem Signalgebungskanal an eine Kommunikationseinheit (201),
- Mittel zum Senden, als Antwort auf den Empfang eines ersten Antwortsignals von der Kommunikationseinheit (201) auf dem ersten Verkehrskanal, eines ersten Bestätigungssignals auf dem ersten Verkehrskanal bei einem ersten Leistungspegel, und
**dadurch gekennzeichnet, dass** weiter umfasst sind:
- Mittel zum, für eine vorbestimmte Anzahl weiterer Antwortsignale, Übermitteln, als Antwort auf den Empfang jedes weiteren Antwortsignals, eines entsprechenden weiteren Bestätigungssignals auf dem ersten Verkehrskanal, wobei das erste weitere Bestätigungssignal bei einem Leistungspegel übermittelt wird, der höher ist als der erste Leistungspegel und wobei alle folgenden weiteren Bestätigungssignale jeweils bei einem Leistungspegel übermittelt werden, der höher ist als der Leistungspegel, bei dem das jeweils vorangehende Bestätigungssignal gesendet wurde,
- Mittel zum Auswählen, als Antwort auf den Empfang eines weiteren Antwortsignals über die vorbestimmte Anzahl hinaus von der Kommunikationseinheit (201), eines zweiten Verkehrskanals, der von dem ersten Verkehrskanal verschieden ist, und
- Mittel zum Senden eines zweiten Zuweisungsbefehls, einschließlich Benachrichtigung darüber, welcher Kanal als der zweite Verkehrskanal ausgewählt wurde, auf einem Signalgebungskanal an die Kommunikationseinheit (201).

21. Steuereinheit nach Anspruch 20, wobei die vorbestimmte Anzahl eins ist.

22. Steuereinheit nach Anspruch 20 oder 21, wobei der erste Leistungspegel niedriger ist als ein maximal möglicher Leistungspegel des ersten Verkehrskanals.

23. Steuereinheit nach Anspruch 22, wobei der erste Leistungspegel niedriger ist als ein erster vorbestimmter Leistungspegel, der dem vorgesehenen Standardleistungspegel des ersten Verkehrskanals entspricht.

24. Steuereinheit nach einem der Ansprüche 17 bis 23, wobei der zweite Verkehrskanal von höherer Qualität ist als der erste Verkehrskanal.

25. Steuereinheit nach einem der Ansprüche 17 bis 24, wobei der zweite Verkehrskanal entweder einen höheren maximal möglichen Leistungspegel oder einen höheren vorgesehenen Standardleistungspegel im Vergleich zu dem ersten Verkehrskanal aufweist.

26. Steuereinheit nach einem der Ansprüche 20 bis 25, weiter umfassend den Schritt des Bestimmens eines Kanalzuordnungsschrittes, der empfindlich dafür ist, welches Antwortsignal nicht empfangen wurde.

27. Steuereinheit nach Anspruch 26, wobei der Kanalzuordnungsschritt ein Bestimmen eines Leistungspegels, der auf dem ausgewählten Verkehrskanal verwendet werden soll, umfasst.

28. Steuereinheit nach einem der Ansprüche 17 bis 27, wobei das Kommunikationssystem ein zellulares Kommunikationssystem ist.

29. Steuereinheit nach Anspruch 28, wobei das Kommunikationssystem ein GSM-System ist.

30. Steuereinheit nach Anspruch 20, wobei die vorbestimmte Anzahl vier ist.

31. Steuereinheit nach einem der Ansprüche 28 bis 30, soweit abhängig von Anspruch 26, wobei der Kanalzuordnungsschritt ein Bestimmen, einen zukünftigen Handover zu implementieren, umfasst.

32. Steuereinheit nach Anspruch 20, wobei die entsprechenden Leistungspegel, bei denen die ersten und weiteren Bestätigungssignale übermittelt werden, mittels eines einstellbaren Datenbankparameters implementiert werden.

33. Basisstationssystem für ein zellulares Kommunikationssystem umfassend eine Steuereinheit gemäß einem der Ansprüche 17 bis 32.

34. Mobilfunkdienst-Vermittlungszentrum für ein zellulares Kommunikationssystem, umfassend eine Steuereinheit nach einem der Ansprüche 17 bis 32.

## Revendications

1. Procédé d'affectation d'un canal de trafic dans un système de communications, le procédé comprenant les opérations suivantes :
sélectionner (305) un premier canal de trafic,
envoyer (310) une première instruction d'affectation comportant la notification du canal qui a été sélectionné au titre dudit premier canal de trafic, sur un canal de signalisation à destination d'une unité de communications (201),
émettre (320), en réponse à la réception, en provenance de ladite unité de communications, d'un premier signal de réponse sur ledit premier canal de trafic, un premier signal d'accusé de réception sur ledit canal de trafic avec un premier niveau de puissance,
**caractérisé en ce qu'**il comprend en outre les opérations suivantes :
sélectionner (380) en réponse à la réception, en provenance de ladite unité de communications (201), d'un deuxième signal de réponse sur ledit premier canal de trafic, un deuxième canal de trafic différent dudit premier canal de trafic, et
envoyer (385) une deuxième instruction d'affectation comportant la notification du canal qui a été sélectionné au titre dudit deuxième canal de trafic, sur un canal de signalisation à destination de ladite unité de communications (201).

2. Procédé selon la revendication 1, où ledit premier niveau de puissance est inférieur au niveau de puissance potentiel maximal dudit premier canal de trafic.

3. Procédé selon la revendication 2, où ledit premier niveau de puissance est inférieur à un premier niveau de puissance prédéterminé correspondant au niveau de puissance normal visé dudit premier canal de trafic.

4. Procédé d'affectation d'un canal de trafic dans un système de communications, le procédé comprenant les opérations suivantes :
sélectionner (305) un premier canal de trafic,
envoyer (310) une première instruction d'affectation comportant la notification du canal qui a été sélectionné au titre dudit premier canal de trafic, sur un canal de signalisation à destination d'une unité de communications (201),
émettre (320), en réponse à la réception, en provenance de ladite unité de communications, d'un premier signal de réponse sur ledit premier canal de trafic, un premier signal d'accusé de réception sur ledit canal de trafic avec un premier niveau de puissance,
**caractérisé en ce qu'**il comprend en outre les opérations suivantes :
pour un nombre prédéterminé de signaux de réponse supplémentaires, émettre (330, 340, 344, 348), en réponse à la réception de chaque signal de réponse supplémentaire, un signal d'accusé de réception supplémentaire correspondant sur ledit premier canal de trafic, où le premier signal d'accusé de réception supplémentaire est transmis avec un niveau de puissance supérieure audit premier niveau de puissance et tous les signaux d'accusé de réception supplémentaires suivants sont chacun émis à un niveau de puissance respectif plus élevé que le niveau de puissance avec lequel le signal d'accusé de réception le précédant a été émis,
sélectionner (380), en réponse à la réception, de la part de ladite unité de communication (201), d'un signal de réponse supplémentaire se trouvant au-delà dudit nombre prédéterminé, un deuxième canal de trafic différent dudit premier canal de trafic, et
envoyer (385) une deuxième instruction d'affectation, comportant la notification du canal qui a été sélectionné au titre dudit deuxième canal de trafic, sur un canal de signalisation à ladite unité de communications (201).

5. Procédé selon la revendication 4, où ledit nombre prédéterminé est 1.

6. Procédé selon la revendication 4 ou 5, où ledit premier niveau de puissance est inférieur au niveau de puissance potentiel maximal dudit premier canal de trafic.

7. Procédé selon la revendication 6, où ledit premier niveau de puissance est inférieur à un premier niveau de puissance prédéterminé correspondant au niveau de puissance normal visé dudit premier canal de trafic.

8. Procédé selon l'une quelconque des revendications précédentes, où ledit deuxième canal de trafic est d'une qualité supérieure à celle dudit premier canal de trafic.

9. Procédé selon l'une quelconque des revendications précédentes, où ledit deuxième canal de trafic possède ou bien un niveau de puissance potentiel maximal plus élevé ou bien un niveau de puissance normal visé plus élevé que ledit premier canal de trafic.

10. Procédé selon l'une quelconque des revendications 4 à 9, comprenant en outre l'opération qui consiste à déterminer une opération d'attribution de canal en réponse à laquelle des signaux de réponse n'ont pas été reçus.

11. Procédé selon la revendication 10, où ladite opération d'attribution de canal comprend la détermination du niveau de puissance à utiliser sur le canal de trafic sélectionné.

12. Procédé selon l'une quelconque des revendication précédentes, où ledit système de télécommunications est un système de communications cellulaire.

13. Procédé selon la revendication 12, où ledit système de communications est un système GSM.

14. Procédé selon la revendication 4, où ledit nombre prédéterminé est 4.

15. Procédé selon l'une quelconque des revendications 12 à 14 dépendant de la revendication 10, où ladite opération d'attribution de canal comprend la détermination visant à mettre en oeuvre un futur transfert.

16. Procédé selon la revendication 4, où les niveaux de puissance respectifs avec lesquels sont émis ledit premier signal d'accusé de réception et lesdits signaux d'accusé de réception supplémentaires sont mis en oeuvre par l'intermédiaire d'un paramètre ajustable de base de données.

17. Unité de commande destinée à affecter un canal de trafic dans un système de communications, l'unité de commande comprenant :
un moyen qui sert à sélectionner un premier canal de trafic,
un moyen qui sert à envoyer une première instruction d'affectation comportant la notification du canal qui a été sélectionné au titre dudit premier canal de trafic, sur un canal de signalisation à une unité de communications (201) ;
un moyen servant à émettre, en réponse à la réception, de la part de ladite unité de communications (201), d'un premier signal de réponse sur ledit premier canal de trafic, un premier signal d'accusé de réception sur ledit premier canal de trafic avec un premier niveau de puissance,
**caractérisé en ce qu'**il comprend en outre :
un moyen servant à sélectionner en réponse à la réception, en provenance de ladite unité de communications (201), d'un deuxième signal de réponse sur ledit premier canal de trafic, un deuxième canal de trafic différent dudit premier canal de trafic, et
un moyen servant à envoyer une deuxième instruction d'affectation comportant la notification du canal qui a été sélectionné au titre dudit deuxième canal de trafic, sur un canal de signalisation à destination de ladite unité de communications (201).

18. Unité de commande selon la revendication 17, où ledit premier niveau de puissance est inférieur au niveau de puissance potentiel maximal dudit premier canal de trafic.

19. Unité de commande selon la revendication 18, où ledit premier niveau de puissance est inférieur à un premier niveau de puissance prédéterminé correspondant au niveau de puissance normal visé dudit premier canal de trafic.

20. Unité de commande destinée à affecter un canal de trafic dans un système de communications, l'unité de commande comprenant :
un moyen qui sert à sélectionner un premier canal de trafic,
un moyen qui sert à envoyer une première instruction d'affectation comportant la notification du canal qui a été sélectionné au titre dudit premier canal de trafic, sur un canal de signalisation à une unité de communications (201) ;
un moyen servant à émettre, en réponse à la réception, de la part de ladite unité de communications (201), d'un premier signal de réponse sur ledit premier canal de trafic, un premier signal d'accusé de réception sur ledit premier canal de trafic avec un premier niveau de puissance,
**caractérisé en ce qu'**il comprend en outre :
un moyen servant, pour un nombre prédéterminé de signaux de réponse supplémentaires, à émettre, en réponse à la réception de chaque signal de réponse supplémentaire respectif, un signal d'accusé de réception supplémentaire correspondant sur ledit premier canal de trafic, où ledit premier signal d'accusé de réception supplémentaire est émis avec un niveau de puissance supérieur audit premier niveau de puissance et tous les signaux d'accusé de réception supplémentaires suivants sont chacun émis avec un niveau de puissance respectif qui est supérieur au niveau de puissance avec lequel le signal d'accusé de réception le précédant a été émis,
un moyen servant à sélectionner, en réponse à la réception, en provenance de ladite unité de communications (201), d'un signal de réponse supplémentaire situé au-delà dudit nombre prédéterminé, un deuxième canal de trafic différent dudit premier canal de trafic, et
un moyen servant à envoyer une deuxième instruction d'affectation, comportant la notification du canal qui a été sélectionné au titre dudit deuxième canal de trafic, sur un canal de signalisation à l'unité de communications (201).

21. Unité de commande selon la revendication 20, où ledit nombre prédéterminé est 1.

22. Unité de commande selon la revendication 20 ou 21, où ledit premier niveau de puissance est inférieur au niveau de puissance potentiel maximal dudit premier canal de trafic.

23. Unité de commande selon la revendication 22, où ledit premier niveau de puissance est inférieur à un premier niveau de puissance prédéterminé correspondant au niveau de puissance normal visé dudit premier canal de trafic.

24. Unité de commande selon l'une quelconque des revendications 17 à 23, où ledit deuxième canal de trafic est d'une qualité supérieure à celle dudit premier canal de trafic.

25. Procédé selon l'une quelconque des revendications 17 à 24, où ledit deuxième canal de trafic possède ou bien un niveau de puissance potentiel maximal plus élevé ou bien un niveau de puissance normal visé plus élevé que ledit premier canal de trafic.

26. Unité de commande selon l'une quelconque des revendications 20 à 25, comprenant en outre l'opération qui consiste à déterminer une opération d'attribution de canal en réponse à laquelle des signaux de réponse n'ont pas été reçus.

27. Unité de commande selon la revendication 26, où ladite opération d'attribution de canal comprend la détermination du niveau de puissance à utiliser sur le canal de trafic sélectionné.

28. Unité de commande selon l'une quelconque des revendication 17 à 27, où ledit système de télécommunications est un système de communications cellulaire.

29. Unité de commande selon la revendication 28, où ledit système de communications est un système GSM.

30. Unité de commande selon la revendication 20, où ledit nombre prédéterminé est 4.

31. Unité de commande selon l'une quelconque des revendications 28 à 30 dépendant de la revendication 26, où ladite opération d'attribution de canal comprend la détermination visant à mettre en oeuvre un futur transfert.

32. Unité de commande selon la revendication 20, où les niveaux de puissance respectifs avec lesquels sont émis ledit premier signal d'accusé de réception et lesdits signaux d'accusé de réception supplémentaires sont mis en oeuvre par l'intermédiaire d'un paramètre ajustable de base de données.

33. Système de stations de base pour système de communications cellulaire comprenant une unité de commande telle que définie dans l'une quelconque des revendications 17 à 32.

34. Centre de commutation de services de mobile destiné à un système de communications cellulaire comprenant une unité de commande telle que définie dans l'une quelconque des revendications 17 à 32.
